Europäisches Patentamt

European Patent Office

Office européen des brevets

(19)

(11) Numéro de publication : **0 465 335 A1**

# (12) DEMANDE DE BREVET EUROPEEN

(21) Numéro de dépôt : **91401795.9**

(22) Date de dépôt : **01.07.91**

(51) Int. Cl.$^5$ : **B29C 47/40,** B29C 47/92, B29C 47/66, B29C 47/44, B29B 7/48

(30) Priorité : **06.07.90 FR 9008635**

(43) Date de publication de la demande :
**08.01.92 Bulletin 92/02**

(84) Etats contractants désignés :
**BE CH DE ES FR GB IT LI NL SE**

(71) Demandeur : **CLEXTRAL
Tour Fiat 1 place de la Coupole
F-92400 Courbevoie (FR)**

(72) Inventeur : **Grisard, Patrice
25 Allée le Prince Ringuet
F-42100 Saint Etienne (FR)**

(74) Mandataire : **Lanceplaine, Jean-Claude et al
CABINET LAVOIX 2, Place d'Estienne d'Orves
F-75441 Paris Cédex 09 (FR)**

(54) **Fourreau pour machine d'extrusion de matières.**

(57)   Le fourreau (20) comprend au moins deux lobes sécants (21a, 21b) d'alésage cylindriques à axes parallèles correspondants chacun à une vis et formant au niveau de leur intersection au moins deux arêtes (22) parallèles longitudinales. Chaque lobe comprend au moins une zone de cisaillement (23a, 23b) destinée à coopérer avec un organe de cisaillement monté sur lesdites vis.

La zone de cisaillement (23a, 23b) de chaque lobe est formée par au moins une rainure (24a, 24b) s'étendant dans le sens d'écoulement de la matière et réalisée sur la paroi interne dudit fourreau (20), ladite rainure ménageant entre elle et chaque arête (22), une portion de surface continue de l'alésage cylindrique formant ledit lobe correspondant.

EP 0 465 335 A1

FIG.4

La présente invention a pour objet un fourreau pour une machine de traitement de matières à au moins deux vis parallèles.

L'invention s'applique spécialement aux extrudeuses à au moins deux vis et, plus généralement aux machines dans lesquelles on produit des effets de mélange, de malaxage, de trituration et notamment de cisaillement par passage dans le fourreau d'une matière entrainée par la rotation des vis.

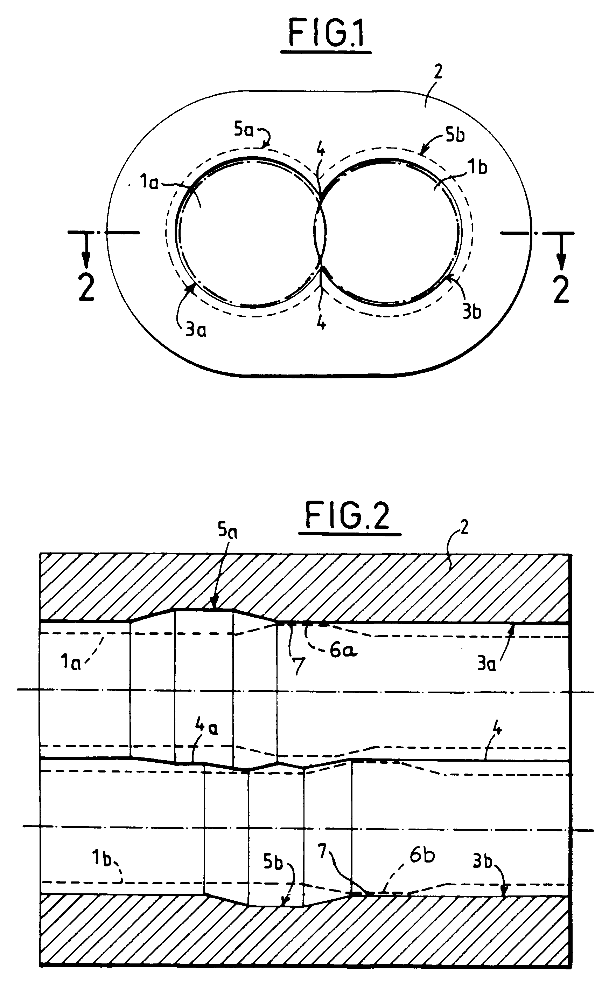

D'une manière générale, une machine à vis de traitement de matières comprend, comme représenté sur les Figs. 1 à 3 ci-jointes, un fourreau allongé 2 enveloppant les vis 1a et 1b et, dans le cas de machines à deux vis, le fourreau 2 est muni de deux alésages cylindriques à axes parallèles dont l'entraxe est inférieur au diamètre des alésages de façon à former deux lobes 3a et 3b sécants dans lesquels sont placées les vis 1a et 1b, celles-ci s'engrénant l'une dans l'autre. Les deux lobes 3a et 3b forment au niveau de leur intersection deux arêtes longitudinales 4 parallèles aux axes des vis 1a et 1b.

Les vis 1a et 1b sont munies sur leur périphérie, notamment de filets en hélice qui entrainent vers l'aval la matière introduite par une extrémité amont du fourreau 2.

La matière est ainsi entraînée jusqu'à l'extrémité aval dudit fourreau qui peut être muni d'une filière d'extrusion ou bien d'un simple orifice de sortie dans le cas où la matière ne doit par être soumise à une extrusion.

Pour faire varier le traitement réalisé au cours de l'avancement de la matière dans le fourreau 2, les vis 1a et 1b sont généralement constituées de zones successives ayant des filets de formes ou de pas différents ou comportant des organes de traitement particulier.

Par exemple, on pourra utiliser des sections de convoyage à pas large ou des sections à pas reserrés ou même des sections de cisaillement qui contribuent, entre autres, au mélange et à la dispersion des charges ou pigments dans la matière, et qui génèrent un auto-échauffement de ladite matière par dissipation visqueuse de la puissance mécanique.

A cet effet, les vis 1a et 1b comportent des organes de cisaillement 6a et 6b (Fig. 1) qui peuvent être constitués par des organes déprimogènes non engrénés, comme par exemple des "cylindres de Couette" ou par des organes déprimogènes engrénés comme par exemple des contre-filets ou des disques malaxeurs.

Afin de faire varier le travail fourni par les organes de cisaillement 6a et 6b, les chambres de fuite 5a et 5b sont formées par un alésage cylindrique de plus grand diamètre que l'alésage du lobe 3a et 3b correspondant.

On sait que, dans l'entrefer 7 (Fig. 2) ménagé entre l'alésage du lobe 3a et 3b et l'organe de cisaillement 6a et 6b correspondant, règne un champ de cisaillement qui contribue au mélange et à la dispersion des charges dans la matière et qui génère un auto-échauffement de ladite matière.

Par modification, soit de la position du fourreau mobile par rapport aux vis fixes, ou soit de la position des vis mobiles axialement par rapport au fourreau fixe, on contrôle la longueur de l'entrefer et ainsi la contrainte de cisaillement et, par ce moyen, le degré d'auto-échauffement ou de dégradation thermomécanique de la matière traitée, ou l'homogénéité du mélange.

Pour obtenir un cisaillement efficace de la matière traitée, la zone de cisaillement doit être constante et les arêtes d'intersection des deux lobes continues de façon à forcer la matière à passer dans les entrefers.

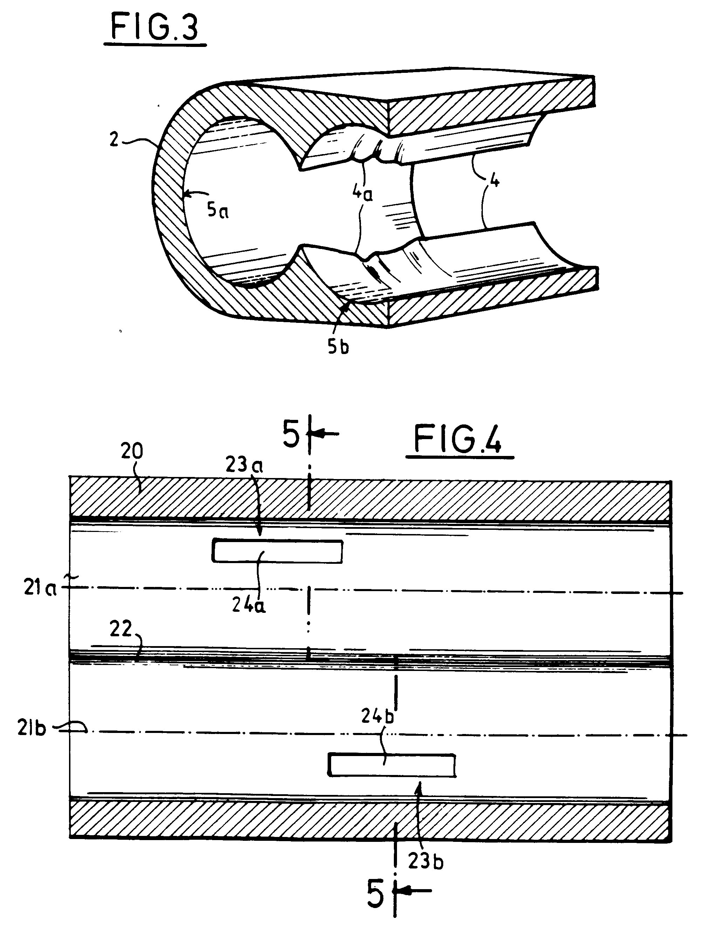

Or, jusqu'à présent les alésages des chambres de fuite 5a et 5b débouchent au niveau des arêtes 4, de telle sorte que les intersections des alésages desdites chambres de fuite 5a et 5b et des alésages des lobes contigus 3a et 3b forment, dans le plan des arêtes 4, deux lignes brisées 4a comme cela apparait sur les figures 2 et 3.

Ces lignes brisées 4a créent donc des chemins de fuite transversaux par où s'écoule la matière si bien que le réglage de la longueur des entrefers en fonction de la matière traitée ne peut pas être réalisé pour obtenir la qualité de la matière désirée.

La présente invention a pour but de s'affranchir des inconvénients précités et de permettre un réglage fiable et efficace de l'intensité de cisaillement de la matière traitée.

L'invention a pour objet un fourreau pour une machine de traitement de matières comprenant au moins deux vis imbriquées, entraînées en rotation à l'intérieur dudit fourreau comprenant au moins deux lobes sécants d'alésage cylindrique à axe parallèle correspondant chacun à une vis et formant au niveau de leur intersection au moins deux arêtes parallèles longitudinales, chaque lobe étant muni d'au moins une zone de cisaillement destiné à coopérer avec un organe de cisaillement monté sur lesdites vis, caractérisé en ce que ladite zone de cisaillement de chaque lobe est formée par au moins une rainure s'étendant dans le sens d'écoulement de la matière traitée et réalisée sur la paroi interne dudit fourreau, ladite rainure ménageant, entre elle et chaque arête d'intersection desdits lobes, une portion de surface continue de l'alésage cylindrique formant ledit lobe correspondant.

Suivant d'autres caractéristiques :
– ladite rainure est parallèle à l'axe dudit lobe correspondant,
– ladite rainure est de forme hélicoïdale et s'arrête avant chaque arête d'intersection desdits lobes,
– ladite rainure a une section rectangulaire,
– ladite rainure a une section circulaire.

D'autres caractéristiques et avantages de la présente invention apparaitront au cours de la description qui va suivre, faite en référence aux dessins annexés sur lesquels :

– la Fig. 1 est une vue en coupe transversale d'un fourreau d'une machine de traitement de matières selon l'art antérieur,

– la Fig. 2 est une vue en coupe selon la ligne 2-2 de la Fig.1,

– la Fig. 3 est une vue en perspective arrachée d'une portion du fourreau et montrant une chambre de fuite selon l'art antérieur,

– la Fig. 4 est une vue en coupe longitudinale selon l'axe des vis d'un fourreau d'une machine de traitement de matières selon l'invention,

– la Fig. 5 est une vue en coupe selon la ligne 5-5 de la Fig. 4,

– la Fig. 6 est une vue en coupe longitudinale selon l'axe des vis du fourreau selon l'invention, avec des organes de cisaillement non engrénés,

– la Fig. 7 est une vue en coupe longitudinale selon l'axe des vis du fourreau selon l'invention avec des organes de cisaillement engrénés,

– la Fig. 8 est une vue en coupe longitudinale selon l'axe des vis d'une variante du fourreau selon l'invention,

– la Fig. 9 est une vue en coupe selon la ligne 9-9 de la Fig. 8.

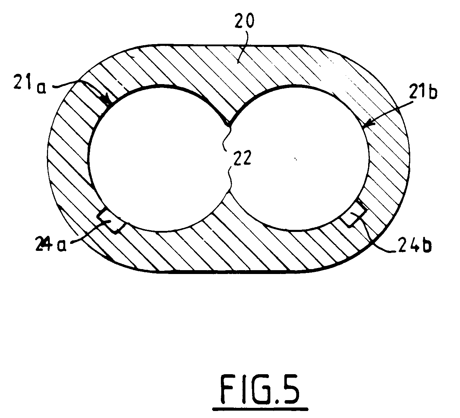

En se reportant aux Figs. 4 à 7 on voit que la machine de traitement de matières comprend, de manière classique un fourreau allongé 20 enveloppant les vis 10a et 10b.

Le fourreau 20 est muni de deux alésages cylindriques à axes parallèles dont l'entraxe est inférieur au diamètre des alésages de façon à former deux lobes 21a et 21b sécants dans lesquels sont placées les deux vis 10a et 10b, celles-ci engrénant l'une dans l'autre.

Les deux lobes 21a et 21b forment au niveau de leur intersection deux arêtes longitudinales 22 parallèles par rapport aux axes desdites vis 10a et 10b.

En fonction, du type de traitement que l'on désire réaliser et de la matière traitée, chaque lobe 21a et 21b comporte une ou plusieurs zones de cisaillement respectivement 23a et 23b qui contribuent au mélange et à la dispersion des charges ou pigments de la matière et qui générent un auto-échauffement de la mtière par dissipation visqueuse de la puissance mécanique.

Chaque zone de cisaillement 23a et 23b est formée par au moins une rainure respectivement 24a et 24b s'étendant dans le sens d'écoulement de la matière traitée et réalisée sur la paroi interne du fourreau 20.

Ces rainures 24a et 24b ménagent, entre elles et les arêtes 22 d'intersection des lobes 21a et 21b, une portion de surface continue de l'alésage cylindrique formant lesdits lobes de façon à ne pas modifier la continuité de ces arêtes.

Selon un premier mode de réalisation représenté aux Figs. 4 et 5 chaque rainure 24a et 24b est parallèle à l'axe du lobe 21a et 21b correspondant.

Chaque lobe 21a et 21b peut comporter plusieurs rainures 24a et 24b parallèles.

Ces rainures 24a et 24b peuvent avoir une section de forme quelconque comme par exemple rectangulaire ou circulaire.

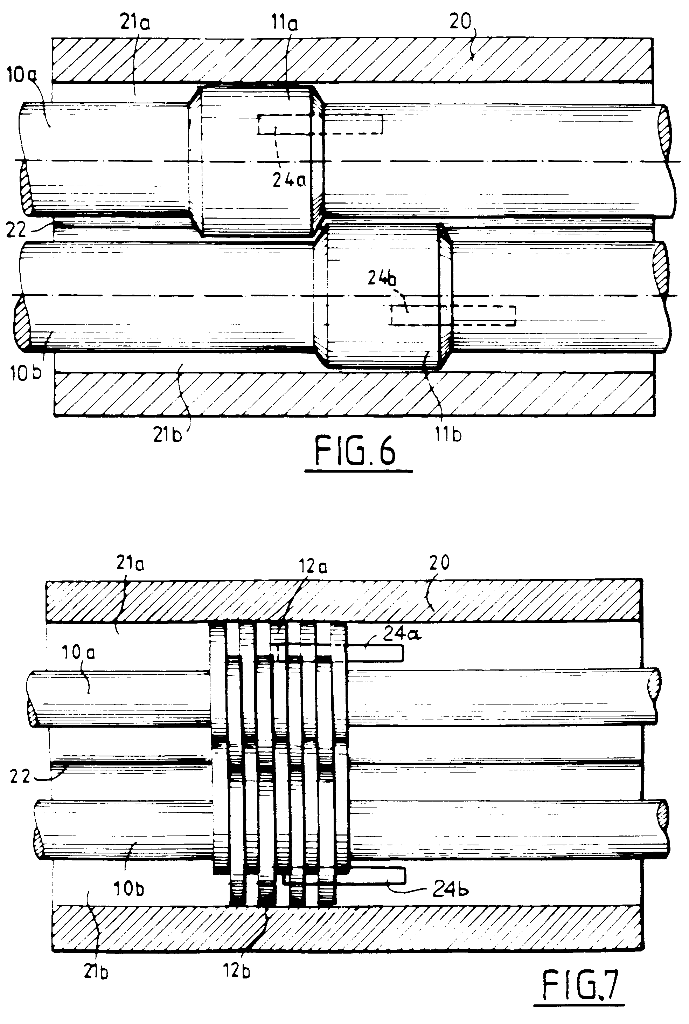

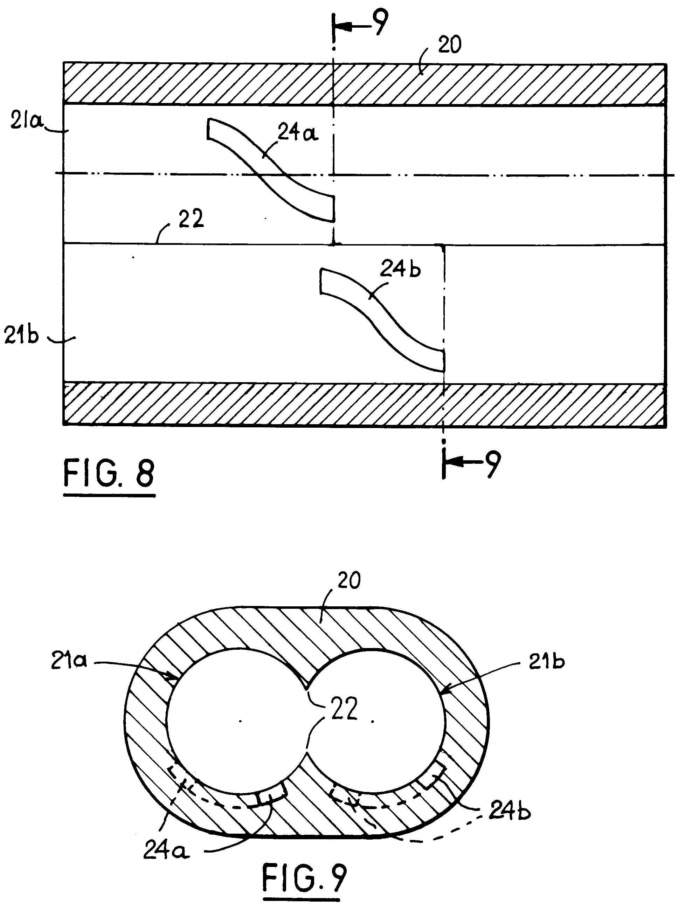

Chaque rainure 24a et 24b est destinée à coopérer avec un organe de cisaillement 11a et 11b (Fig. 6) ou 12a et 12b (Fig.7) montée sur chaque vis 10a et 10b pour régler la longueur active de celui-ci.

Les organes de cisaillement 11a et 11b sont constitués par exemple par des organes déprimogènes non engrénés tels que des "cylindres de Couette" (Fig. 6).

Chaque organe de cisaillement 11a et 11b ménage avec l'alésage du lobe correspondant 21a et 21b un entrefer dans lequel règne un champ de cisaillement qui contribue au mélange et à la dispersion des charges ou pigments dans la matière et qui génère un auto-échauffement de la matière par dissipation visqueuse de la puissance mécanique.

Par déplacement axial du fourreau 20 ou des vis 10a et 10b par rapport à l'autre élément, on modifie et on contrôle la longueur de ces entrefers et, par ce moyen, le degré d'auto-échauffement ou de dégradation thermomécanique de la matière traitée ou l'homogénéité du mélange.

La Fig. 6 représente une position intermédiaire où les organes de cisaillement 11a et 11b chevauchent les rainures 24a et 24b permettant ainsi d'obtenir un travail moyen de la matière traitée.

Dans le cas où les organes de cisaillement 11a et 11b coïncident avec les rainures 24a et 24b, le travail fourni par les organes de cisaillement 11a et 11b est nul.

Pour obtenir un travail maximal, les organes de cisaillement 11a et 11b sont complètement écartés des rainures 24a et 24b.

Dans les zones de cisaillement 23a et 23b, toute la matière est forcée de passer dans les entrefers très étroits, et très brefs.

Les organes de cisaillement 12a et 12b peuvent également être constitués par exemple par des organes déprimogènes engrénés tels que des contrefilets, des disques malaxeurs ou des disques alternés (Fig. 7) qui ménagent avec le fond de la rainure 24a et 24b correspondante un entrefer.

Dans ce cas, les rainures 24a et 24b sont situées l'une en face de l'autre et par déplacement axial du fourreau 20 ou des vis 10a et 10b par rapport à l'autre élément, on modifie et on contrôle la longeur des entrefers.

Selon un autre mode de réalisation représenté aux Figs. 8 et 9, les rainures 24a et 24b ont une forme hélicoïdale et s'arrêtent avant chaque arête d'intersection 22 de façon à ménager une portion de surface continue de l'alésage cylindrique formant le lobe 21a et 21b correspondant.

Chaque lobe 21a et 21b peut comporter également plusieurs rainures 24a et 24b parallèles et ces rainures peuvent avoir une section de forme quelconque comme par exemple rectangulaire ou circulaire.

Enfin, l'un des lobes peut comporter par exemple des rainures parallèles à l'axe des vis et l'autre peut comporter par exemple des rainures hélicoïdales.

Grâce d'une part à la disposition des rainures 24a et 24b et d'autre part à la continuité des arêtes 22 d'intersection des lobes 21a et 21b du fourreau selon l'invention, on obtient des zones de cisaillement constantes ce qui permet d'effectuer un travail de la matière dans les meilleures conditions possibles.

Dans certains cas, il est nécessaire de multiplier les zones de cisaillement.

A cet effet, les vis 10a et 10b comportent une succession d'organes de cisaillement et chaque lobe comporte une succession de rainures.

**Revendications**

1. Fourreau pour une machine de traitement de matières comprenant au moins deux vis (10a, 10b) imbriquées, entrainées en rotation à l'intérieur dudit fourreau (20) comprenant au moins deux lobes (21a, 21b) sécants d'alésages cylindriques à axes parallèles correspondant chacun à une vis et formant au niveau de leur intersection au moins deux arêtes (22) parallèles longitudinales, chaque lobe (21a, 21b) comportant au moins une zone de cisaillement (23a, 23b) destinée à coopérer avec un organe de cisaillement (11a, 11b ou 12a, 12b) montés sur lesdites vis, caractérisé en ce que ladite zone de cisaillement (23a, 23b) de chaque lobe (21a, 21b) est formée par au moins une rainure (24a, 24b) s'étendant dans le sens d'écoulement de la matière traitée et réalisée sur la paroi interne dudit fourreau (20), ladite rainure (24a, 24b) ménageant entre elle et chaque arête (22) d'intersection desdits lobes (21a, 21b), une portion de surface continue de l'alésage cylindrique formant ledit lobe correspondant.

2. Fourreau selon la revendication 1, caractérisé en ce que ladite rainure (24a, 24b) est parallèle à l'axe du lobe (21a, 21b) correspondant.

3. Fourreau selon la revendication 1, caractérisé en ce que ladite rainure (24a, 24b) est de forme hélicoïdale et s'arrête avant chaque arête (22) d'intersection desdits lobes (21a, 21b).

4. Fourreau selon l'une quelconque des revendications 1 à 3, caractérisé en ce que ladite rainure (24a, 24b) a une section rectangulaire.

5. Fourreau selon l'une quelconque des revendications 1 à 3, caractérisé en ce que ladite rainure a une section circulaire.

# FIG.1

# FIG.2

## FIG.3

2

5a

4a

4

5b

## FIG.4

5

20

23a

24a

21a

22

24b

21b

23b

5

FIG.5

FIG.6

FIG.7

FIG. 8

FIG. 9

Office européen
des brevets

**RAPPORT DE RECHERCHE EUROPEENNE**

Numéro de la demande

EP    91 40 1795

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X<br>Y | DE-A-3 728 442 (WERNER & PFLEIDERER GMBH)<br>* abrégé; figures *<br>--- | 1,2<br>3-5 | B29C47/40<br>B29C47/92<br>B29C47/66 |
| Y | EP-A-116 773 (UNIROYAL, INC.)<br>* abrégé; figures *<br>--- | 3-5 | B29C47/44<br>B29B7/48 |
| A | US-A-4 299 499 (D.H. BUCHHEIT)<br>* figures *<br>--- | 1 | |
| A | JP-A-0 262 222 (MITSUBISHI HEAVY IND. LTD)<br>* figures *<br>--- | 1 | |
| A | DE-A-1 502 335 (WERNER & PFLEIDERER MASCHINENFABRIK)<br>* figures *<br>--- | 1 | |
| A | FR-A-2 636 560 (CLEXTRAL)<br>* page 10, ligne 19 - ligne 30; revendications; figures *<br>--- | 1 | |
| A | DE-A-1 909 818 (NRM CORP.)<br>* figures *<br>--- | 1-5 | DOMAINES TECHNIQUES RECHERCHES (Int. Cl.5) |
| A | FR-A-2 200 106 (FRIED. KRUPP GMBH)<br>* figures *<br>----- | 1-5 | B29C<br>B29B |

**Le présent rapport a été établi pour toutes les revendications**

| Lieu de la recherche | Date d'achèvement de la recherche | Examinateur |
|---|---|---|
| LA HAYE | 26 SEPTEMBRE 1991 | BELIBEL C. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)